Europäisches Patentamt

European Patent Office

Office européen des brevets

(11) Publication number: **0 067 317**
**B1**

# EUROPEAN PATENT SPECIFICATION

(45) Date of publication of patent specification: **26.02.86**

(51) Int. Cl.⁴: **F 16 C 32/00,** F 16 C 17/00

(21) Application number: **82104234.8**

(22) Date of filing: **14.05.82**

(54) Fluid bearing assembly.

(30) Priority: **12.06.81 US 273280**

(43) Date of publication of application:
**22.12.82 Bulletin 82/51**

(45) Publication of the grant of the patent:
**26.02.86 Bulletin 86/09**

(84) Designated Contracting States:
**BE CH DE FR GB IT LI NL SE**

(56) References cited:
**EP-A-0 055 334**
**US-A-3 239 283**
**US-A-3 339 421**
**US-A-3 351 393**
**US-A-3 359 945**
**US-A-3 433 538**
**US-A-3 471 205**
**US-A-3 626 510**

**Transactions of the ASME, Journal of Basic
Engineering, June 1964, E.O.J. Salbu:
"Compressible Squeeze Films and Squeeze
Bearings", pp.355-366**

(73) Proprietor: **International Business Machines
Corporation
Old Orchard Road
Armonk, N.Y. 10504 (US)**

(72) Inventor: **Scranton, Robert Alan
Orchard Drive
South Salem New York 10590 (US)**

(74) Representative: **Ekström, Gösta E. et al
IBM Svenska AB Box 962
S-181 09 Lidingö (SE)**

Courier Press, Leamington Spa, England.

## Description

This invention relates to bearing assemblies, comprising a support, an object to be supported by the support, and a bearing member with a bearing surface between the object and the support.

Frictionless and low-friction bearings are useful in a variety of mechanical instruments, including actuators for the movement of magnetic recording heads in computer disk file systems. One type of bearing which is known to be suitable for this purpose is the externally-pressurized air bearings, i.e. one in which two surfaces are prevented from touching by the flow of air from an external air pump. However, the poor reliability and high cost of such pumps has prevented this type of bearing from finging acceptance in disk files.

Another type of bearing is disclosed in US—A—3351393, which describes a bearing resiliently supported by a pair of contigues discs of oppositely polarized piezoelectric material. In response to a signal applied to the discs, one contracts while the other expands vice versa. No relative motion is permitted between the facing surfaces of the discs. They therefore tend to bow alternately in one direction and the other so that a relatively large amplitude of motion is mechanically coupled to the bearing thereby reducing the effect of static friction. However, the oscillatory forces, which are mechanically coupled to the bearing cause excessive vibration of the object supported by the bearing which is intolerable in some applications.

A further type of bearing which might initially appear to be suitable is a squeeze bearing disclosed in an article by E. O. J. Salbu "Compressible Squeeze Films and Squeeze Bearings", Trans. ASME Journal of Basic Engineering, June 1964, page 355 to 366, further called the Salbu article. In this bearing, two closely conforming surfaces are oscillated next to each other to generate a positive load supporting force.

However, these bearings have a number of drawbacks which have made them unsuitable for practical application in most technologies: .

1. The conforming surfaces are rigid and heavy.

2. The transducer which oscillates the surfaces of the bearing must be correspondingly massive.

3. The power dissipation is high.

4. The ratio of bearing weight to load-carrying capacity is too large.

5. Because of the relatively large oscillating mass of the bearing itself, it has been impossible to make the frequency of oscillation higher than the audible range. In fact squeeze bearings designed in accordance with the Salbu article have produced acoustic vibrations which are intolerably loud.

6. The oscillatory forces cause excessive vibration of the object supported by the bearing which is frequently an intolerable characteristic of a bearing, especially where precise location of the object is required, as contrasted to oscillation of location of the object.

The type of squeeze film bearing discussed in the Salbu article requires one of the bearing surfaces to vibrate against a thin entrapped air region to produce a squeeze film of superambient pressure. From considerations of load, stiffness and machining tolerances, a minimum vibration amplitude of 2.5 µm is necessary. Two known methods of producing such a vibration are magnetic and piezoelectric. However, a magnetic actuator produces stray fields and is only capable of "unidirectional motion" i.e., a thrust bearing. It is not easily used for a journal bearing. Unfortunately, the simple expansion and contraction of a piezoelectric body is a very small effect. To produce the required amplitude of vibration would require a very thick and undesirably massive transducer, even in resonance.

US—A—3,626,510 describes a gyroscope with an hydraulic thrust bearing with a liquid between bearing surfaces, one of which is oscillated normal to the bearing surfaces to generate a positive load supporting force on the bearing. The patent quotes from the Salbu articles, teaching that the "Reynolds Equation is used to show that the relative lateral motion between the bearing surfaces produces a nonsymmetrical force per cycle with the greater force occurring on the closing part of the cycle. Such phenomenon is referred to as 'pumping action' provided by the high frequency oscillations and is attributable to compression occurring in a compressible gas film". Such bearings are described as squeeze bearings with a pair of parallel surfaces which derive support by relative axial oscillation of the surfaces at a high frequency. It states later that at high frequency, the gas cannot flow out of the bearing space fast enough to avoid compression. It is also referred to a pumping action attributable to compression occurring in the compressible gas film. Various references are cited therein. US—A—3,626,510 is an hydraulic derivative of the gas squeeze bearing, with an anticaviation means in the form of a pressurizing means, combined with a partially hemispherical air squeeze bearing at the opposite (upper) end of the shaft. The hydraulic bearing (less curved) is at the bottom. Both are thrust bearings. The lower bearing has a pivot which prevents the lower end of the shaft from coming to rest on the seat.

US—A—3,339,421 describes a cylindrical PZT piezoelectric cylinder providing pulsations of the entire cylinder to provide a gaseous squeeze bearing about the periphery of the cylinder and on its axial ends in a gyroscopic mounting.

US—A—3,433,538 describes an improved air bearing with a resilient ring-like element in the bearing for support of the piezoelectric transducer element along one of the strain axes of the element.

In US—A—3,471,205 and US—A—3,359,045, a cylindrical piezoelectric or magnetostrictive strain producing member vibrates in both axial and radial direction at an ultrasonic frequency. The device provides a simultaneous thrust and journal bearing.

I examined the possibility of using Salbu type squeeze film bearings for a totally new application: to support the voice coil and head suspension spring of a disk file actuator. The use of a non-contact, internally damped bearing for the support of the voice coil would solve the striction and friction problems of future disk file actuators.

In accordance with this invention, all the objections to previous squeeze bearings have been overcome by replacing the rigid oscillatory motion by a flexural (bending) motion of a laminated bearing member, one of whose layers is preferably of a piezoelectric, electrostrictive or magnetostrictive, material is attached to a support or an object to be supported, preferably at a nodal point of oscillation. Such beaings vibrate in an inaudible ultrasonic frequency range. They can support on the order of fifty times their own weight and they consume only a few watts of power. In addition, both flat planar bearings and cylindrical journal bearings are easily fabricated.

This is a low friction bearing which can be used for an object such as a meter, gyro, synchro, capstan, servo motor or a magnetic recording head. It uses the flexural oscillation of a bearing surface up and down with respect to a second bearing surface.

In a disc form of bearing, a column of air beneath the lower surface of the disc rushes in beneath the disc as its centre rises. The air compresses as the cnetre of the disc drops to provide support. The disc may comprise two oppositely excited piezoelectric layers laminated or bonded together, or alternatively, one piezoelectric layer bonded together with a layer of another material. This makes it possible to produce a piezoelectric disc which oscillates with the outer portion of the disc dropping for an applied positive field extending from top to bottom of the disc. When the electric field is reversed to be negative, then the outer portion of the disc rises and the central portion of the disc falls. Thus, the disc flexes or bends into a bowl type of shape which is cupped upwardly and downwardly with rapid oscillations up and down at a frequency in the audio or above the acoustic frequency range. As the disc oscillates, air rushes in under the upwardly cupped disc. That cupping provides a large peripheral clearance between the edge of the bearing disc and the flat surface upon which the bearing is supported by the air which rushes in and out under the disc as it oscillates. When this disc is cupped upwardly the air access is easy. When the disc is cupped downwardly, the periphery of the disc is near the flat surface of the bearing upon which the disc is supported and the air is restrained from escaping from the space beneath the downwardly cupped disc. As the disc uncups or passes through its flat position, the air is compressed, thereby raising or lifting the disc and any load it supports. During operation, the oscillating disc lifts away from the bearing support surface and remains separated from it by the air film during all portions of the cycle of oscillation.

Alternatively, the bearing can be a slidable or rotary bearing with a hollow sleeve being composed of several separate piezoelectric segments aligned longitudinally along the axis of the sleeve so that with three or four segments the material of the sleeve will bend in and out. The annular cross section of the sleeve is bent alternately into the two distorted alternate cross sections shown for the positive and reversed fields. These cross sections may be elliptical, triangular, square or high order polygons.

Features of the invention are as follows:
·1. An oscillating pneumatodynamic bearing uses oscillating cupping and reverse cupping bearings. The mounting can be made at a nodal (motionless) position which eliminates vibration of the supported object. No shock absorber or compliant mounting is required.

2. A distorted squeeze bearing sleeve about a central rod is adapted for a journal bearing.

3. Operation is optimized by operating at the frequency which produces mechanical resonance of the disc or sleeve.

Such a squeeze film bearing has a low mass transducer and reduced mechanical vibration of the supported parts. This invention uses a laminated or·sandwich construction of piezoelectric material to generate the required vibration.

A practical problem in the application of oscillatable bearings is that the required fundamental vibration of the bearing surface causes an undesired vibration of the supported structure. In many cases, the supported structure should be free from these vibrations. The problem can be minimized by using a very high fundamental frequency of vibration and by having a high ratio of supported mass to bearing mass.

In addition, this invention provides a reduction in the amplitude of vibration transmitted to a supported mass by attaching the transducer to that mass or its support at a node of vibration of the transducer. The amplitude of vibration of the transducer is small or zero at the node.

One bearing described is a disc-shaped thrust bearing. Such a bearing could be used as the primary constraint against one degree of freedom in a disc file actuator. It can be combined with other squeeze bearings or other types of bearings, such as a swing arm, to provide a complete bearing system.

The inventive concept of a piezoelectric bender element squeeze bearing can be extended· to a journal bearing which would provide constraint against four degrees of freedom.

The scope of the invention is defined by the appended claims; and how it can be carried into effect is hereinafter particularly described with reference to the accompanying drawings, in which:—

FIG. 1 is a sketch of an object vibrating above a surface to provide a squeeze bearing in accordance with the prior art;

FIGS. 2, 4 and 6 are perspective diagrammatic views of a laminated disc-shaped squeeze bearing in accordance with this invention, in three positions;

FIGS. 3, 5 and 7 are sectional views of the bearing of FIGS. 2, 4 and 6, respectively;

FIG. 8 is a sectional view of the bearing of Fig. 2 in operation;

FIG. 9 is a perspective view of the bearing of Fig. 2 with attachment means;

FIG. 10 is a sectional view of the bearing of Fig. 11 on the line X—X in Fig. 11;

FIG. 11 is a plan view of a disc-shaped squeeze bearing according to the invention from the plane of line XI—XI in Fig. 10;

FIG. 12 shows a test circuit for a squeeze bearing;

FIG. 13 shows a modification in which squeeze bearing transducers are mounted on a stationary support;

FIGS. 14 to 25 show a pneumatodynamic or squeeze bearing of a tubular design with four nodes of non-deformation in perspective and general end shape;

FIGS. 26 to 29 show a similar tubular squeeze bearing with six nodes;

FIG. 30 is a perspective view of a linear actuator for a disc file head which is provided with both a tubular squeeze bearing and a single disc squeeze bearing in combination;

FIG. 31 is a more detailed perspective view of the embodiment of the actuator of Fig. 30;

FIG. 32 is an elevational view of a linear actuator for a magnetic recording head with squeeze bearings to support and guide the armature;

FIG. 33 is a sectional view on the line XXXIII—XXXIII of Fig. 32; and

FIG. 34 is a diagrammatic view of a modification in which the tubular transducer is mounted on a stationary support.

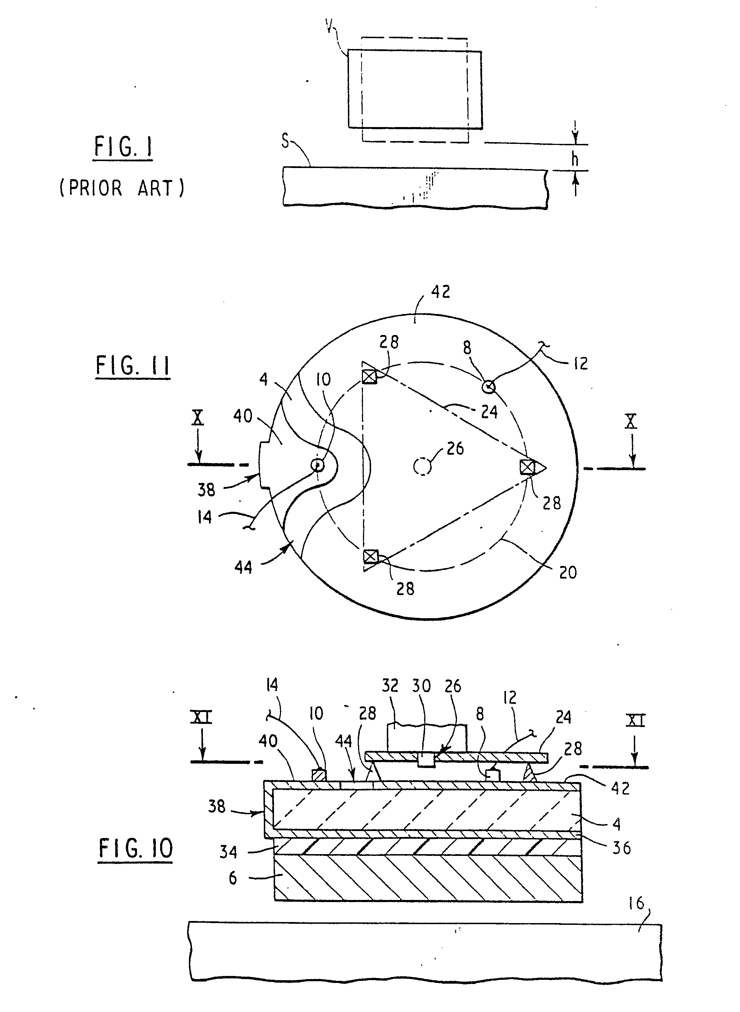

FIG. 1 shows a sketch of a prior art form of squeeze bearing of the variety described in the Salbu article. A vibrating structure V is suspended above a support surface S by the air entrapped under the structure V as it is vibrated up and down. The solid-line shape of structure V is its shape when an electric field is applied and the dotted-line shape is the shape of the structure V when there is no applied field. This is achieved preferably by a direct use of the piezoelectric effect to generate bearing vibration with the dimensions greatly exaggerated for the purpose of explanation. Another method of producing the vibration is magnetic force applied to the suspended portion of the bearing. The height to which the structure V is raised is shown by the formula $h = h_o + d \sin W_o t$, where, for example, d is about 0.005 mm and $h_o$ is about 0.01 mm. The value $h_o$ is the average height, d is amplitude of vibration, and $W_o$ is frequency of vibration. The problem is that for most materials of bulk dimensions such as shown in Fig. 1, bonding of distortion beyond 1 part in $10^4$ will break the materials. Thus, in order to obtain the amplitude of vibration required to move the structure V with a vibration of 2.5 micrometres, which is preferred in a typical application, the structure V must be 2.5 cm thick. That requires a suspended bearing with a very large mass in relationship to the load suspended in many cases. Such a heavy bearing will tend to slow down acceleration of light loads in response to actuation of the load by a motor.

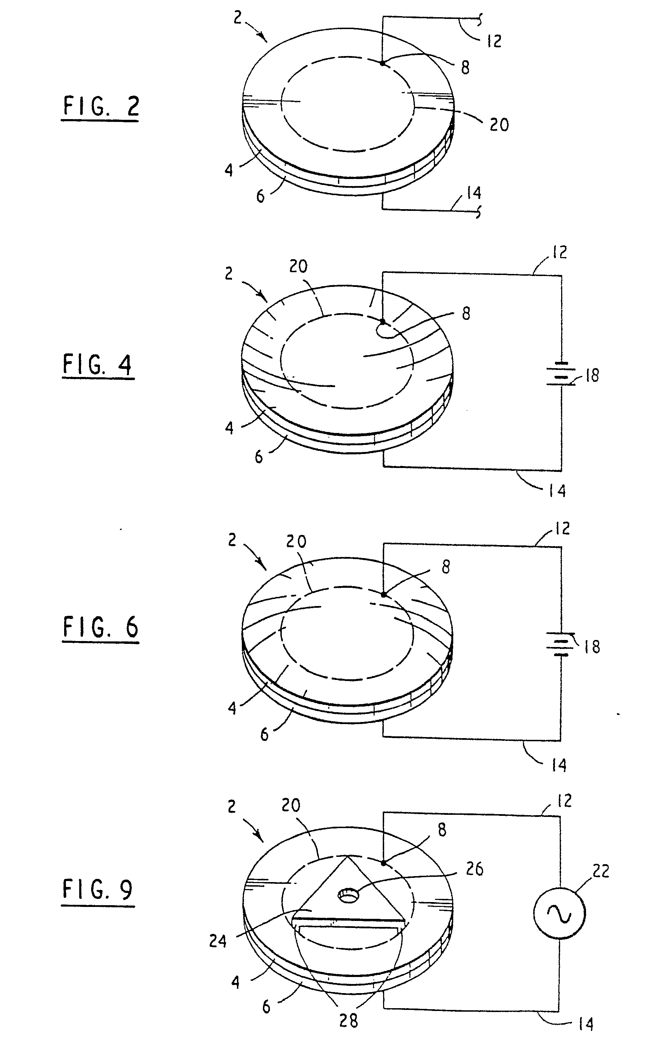

FIG. 2 shows a laminated bearing member for use in a bearing assembly according to the invention. The bearing member is in the form of a disc 2 composed of a layer 4 of piezoelectric material and a layer 6 of another material.

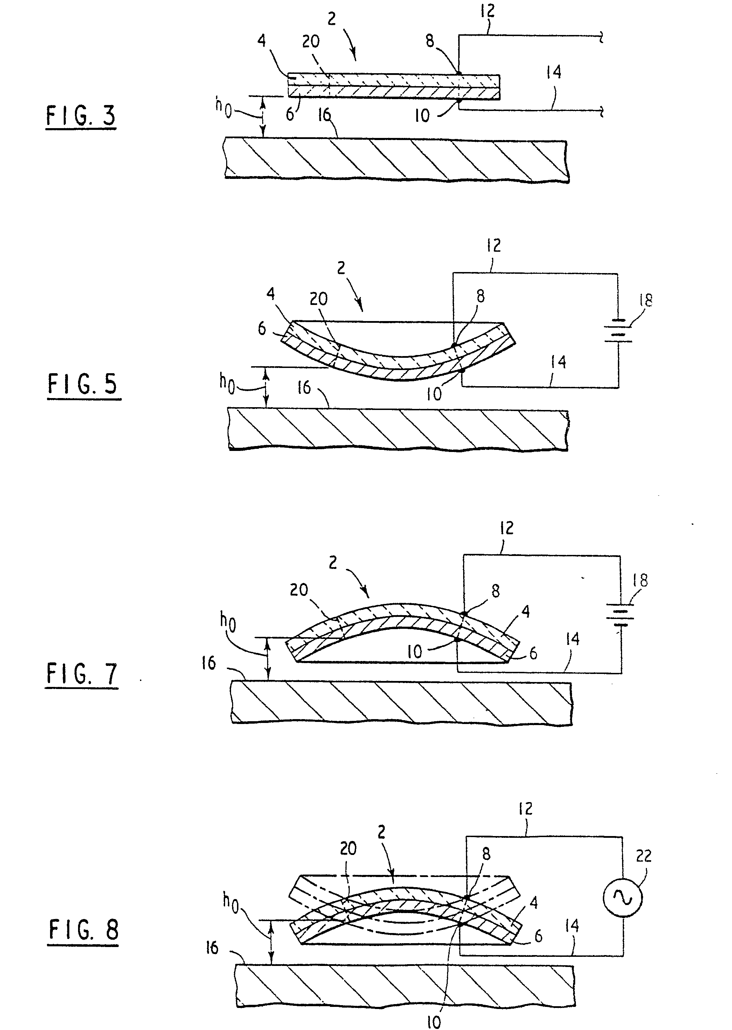

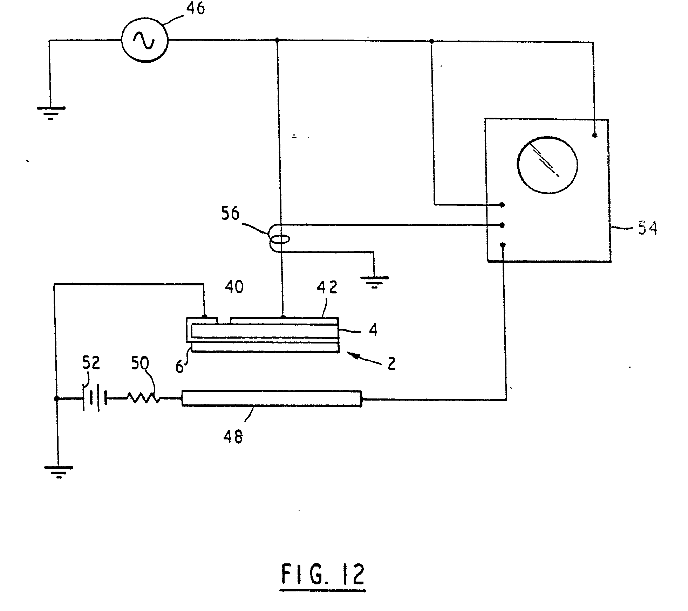

Electrical contracts 8 and 10 shown diagrammatically in Fig. 3 and in greater detail in Figs. 10 and 11, connect the upper and lower surfaces of the piezoelectric layer 4 with electrical conductors 12 and 14. The disc 2 is shown and Fig. 3 at a height $h_o$ above a support surface 16. If the conductor 12 is connected to the negative terminal of a battery 18 (Figs. 4 and 5) and the conductor 14 to the positive terminal of the battery B, the disc 2 cups upwardly. If conductor 12 is connected to the positive terminal of the battery 18 (Figs. 6 and 7) and the conductor 14 is connected to the negative terminal of the battery, the disc 2 cups downwardly. The cupping is caused by bending and unbending of the material of the disc as the change in physical dimensions of the layer 4 of piezoelectric material is resisted by the layer 6 of other material laminated thereto. The cupping takes place about a nodal circle 20. Repeated cupping in alternate directions is achieved by connecting the conductors 12 and 14 to an oscillator 22 (Figs. 8 and 9) at the frequency of the applied excitation.

This affords a continuous oscillation of the disc 2 between the positions shown in full lines and dotted lines in Fig. 8. The outer periphery of the disc 2 rises and falls as the central portion inside the nodal circle 20 falls and rises. A pumping action is achieved so that the disc 2 is supported above the surface 16 with the nodal circle 20 at a height $h_o$.

So that a load may be carried by the disc 2, a triangular mount 24 (Fig. 9) having a central aperture 26 is connected to the disc 2 by feet 28 arranged around the nodal circle 20. The mount central aperture 26 (Fig. 10) receives a pin 30 on the base of an object 32 constituting the load carried by the disc 2. The triangular arrangement of the feet 28 and the mount 24 is particularly appropriate in view of the flexibility of the disc 2 and the need for stability and light weight. Polygonal and rounded supports with multiple feet can be employed so long as the feet are attached at points on the nodal circle. The reason for attaching at the nodal circle is that the vibration of the disc 2 is substantially zero or at a null at that locus so the vibration transmitted to the load 32 is minimized.

In a practical embodiment, the laminated disc 2 is 16.5 mm in diameter, 1 mm thick, 1.5 g in mass, uses 2 watts of electrical energy at 28 khz, with a 10 micrometre flying height, a 100 g thrust load and 30 g-cm torque load. The layer 4 is a disc of molybdenum, preferably about 0.5 mm thick and about 15 mm in diameter. Next an epoxy layer 34 about 20 micrometres thick is used to secure the molybdenum to a thin film metallized layer 36 of nickel plate about 1 micrometre thick on the lower face of the layer 2 of PZT piezoelectric ceramic of lead zirconate titanate, 0.5 mm thick. A contact strap 38 extends up the side of the piezoelectric layer 2 to connect the layer 36 to one part 40 of a metallization layer on the upper surface of the layer 4. The other part 42 of the metallization layer is separated from the part 40 by a serpentine gap 44 (Fig. 1). The parts 40 and 42 constitute terminals for the lower and upper surfaces of the piezoelectric layer 2. The terminals are both on the upper surface of the disc 2 in order that the electrical contacts 8 and 10 can be located on the nodal circle 20 to minimize stress on the leads 12 and 14. The fact that the potential of the contact 10 is exposed to a portion of the upper surface of layer 4 is not a problem because the surface area covered by the part 40 is sufficiently small.

For the construction of flat thrust bearings, discs of piezoelectric ceramic PZT-4 are obtainable, for example from Clevite, Vernitran Piezoelectric Division, .063 cm thick by a 2.5 cm diameter. The discs are then lapped on both sides to a flatness of 5 micrometres and a thickness of 0.05 cm. The discs are then cut by an ultrasonic cutter to a diameter of 1.65 cm.

A flat disc of a matching material such as sapphire, alumina, mullite, SiC, or molybdenum is obtained of the same diameter and approximately the same thickness. One side of this disc will be the bearing surface and must be very flat. A typical flatness is 4 waves, as measured by an optical reference flat and 546 nm light.

For testing and experimental purposes, it is useful to have a conductive bearing surface to monitor touching (bearing failure). For this reason, either a conductive bearing surface disc such as molybdenum or SiC should be used or the nonconductive disc (sapphire, alumina, mullite) should be plated on all sides.

The PZT disc (and the non-conductive disc if desired for touching sensing) are nickel plated on all sides. Then the plating is removed from most but not all of the edge of the PZT disc to form the conductive strap 38 (Fig. 10). Plating may be removed by mechanically grinding or sanding or by masking and etching. Additionally, the top surface gap 44 is sandblasted, ground or etched into the PZT (Figs. 10 and 11). Additional electrode patterns may be cut for feedback electrode to keep the device in resonance.

Next the PZT and sapphire discs are epoxy bonded together and allowed to cure at room temperature. The epoxy may be conductive to facilitate electrical contact to the bottom bearing surface, if touch sensing is desired. If touch sensing is not desired, the epoxy may be non-conductive.

The electrical contacts and mechanical mounting to the PZT/sapphire laminate are made at the node of mechanical resonance. The diameter of the node circle of a disc is 0.68 of the disc diameter, for example, 1.12 cm node circle diameter for a disc 1.65 cm in diameter. Electrical contacts are made by soldering fine wires to the plating at the node. Mechanical mounting is achieved by epoxying a three-point stand, comprising three feet 28 and a mount 24, onto the PZT surface. This stand must be rigid and strong enough to support the load that the bearing carries, but not so rigid as to enable differential thermal expansion between the load and the PZT/sapphire laminate to cause bending of the laminate. In practice this is easily achieved with a triangular mechanical mount 24 can be formed of nylon or a low friction plastics material, such as SP polyimide, Vespel, with feet 28 that are 0.03 cm in diameter and 0.05 cm high.

The completed laminate is placed on a conductive optically flat surface and tested as shown in Fig. 12.

### Testing

A variable frequency oscillator 46 (Fig. 12) is connected between ground and the part 42 of the metallization layer constituting the terminal for the upper surface of the piezoelectric layer 4 of the laminated disc 2 under test. The other part 40 of the metallization layer constituting the terminal for the lower surface of the layer 4 is connected to ground. The disc 2 is placed on a conductive flat surface 48 which is connected through a resistor 50 to the negative terminal of a battery 52 whose positive terminal is connected to ground. Because the layer 6 is either conductive or covered by a conductive layer, the surface 48, when the disc 2 is in contact therewith, is connected to ground and the battery 52 is shunted through resistor 48.

The oscillator 46 is connected to an oscilloscope 54 which also receives signals from a current probe 56 coupled to the lead from the oscillator to the disc 2 and from the conductive surface 48.

The oscillator 46 is turned on and the mechanical resonance is found by observing the relative phase of the current and voltage waveforms on the oscilloscope 54. At a frequency below the resonant frequency, the laminated disc 2 acts as a capacitor, with the current and voltage out of phase. At resonance, the laminated disc acts as a resistor, with the current and voltage substantially in phase.

The oscillator frequency is adjusted for resonance within the range 20 to 50 KHZ. Other circuits may be used to keep the oscillator frequency automatically at the resonant frequency. These circuits may employ phase-locked loops or feedback electrodes and are known to electrical engineers skilled in the art.

Operation of the disc 2 as a bearing is observed by monitoring the touch sensor output from the surface 48. As the amplitude of the oscillator drive voltage is increased, the laminated disc will suddenly lift off the plate by 5 to 35 micrometres and become frictionless. The touch sensor output from the surface 48 will then show the open circuit voltage of the battery 52. When the bearing becomes frictionless, the slightest tilt to the conductive flat surface 48 or the slightest tug on the electrical leads will cause the laminated disc to move. At the intermediate levels of drive, insufficient for truly frictionless operation, the laminated disc may appear to be somewhat frictionless, but the touch sensor output, as monitored by the oscilloscope 54, will show that the laminated disc is touching the conductive flat surface 48, perhaps once each drive cycle. This intermediate range of operation is not truly frictionless and will, in time, cause wear of the two touching surfaces and production of particulates and other wear products. The voltage and power required for true squeeze bearing operation (no touching) depends on the uniformity of the materials, bonding and the flatness of the laminated disc and conductive flat surface CF. A well made laminated disc may have a resonance at 30 khz with a quality factor of 300 and require 3.5 V rms and 10 ma rms to support 100 g of load.

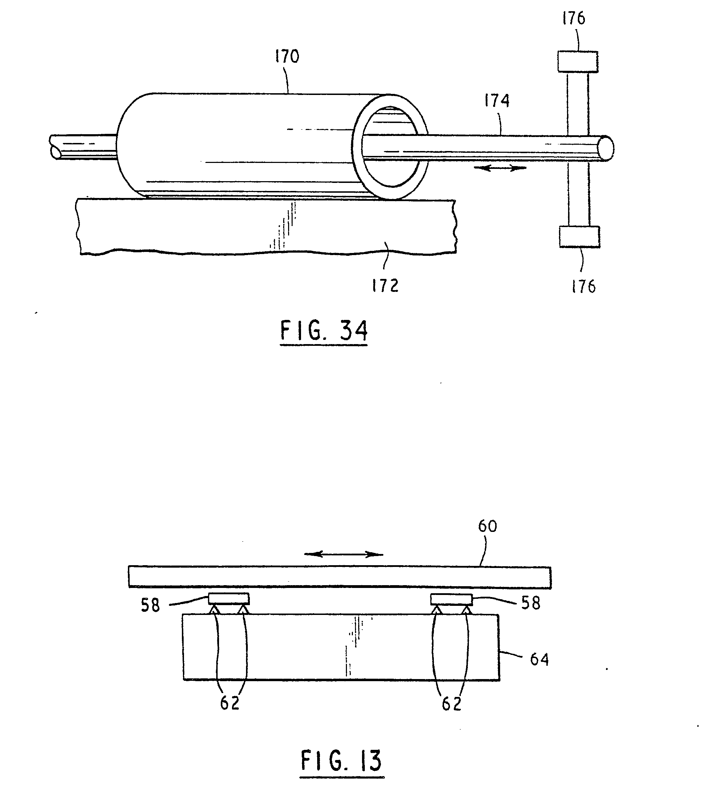

Fig. 13 shows diagrammatically the use of two laminated discs 58, similar to those described in connection with Figs. 2 to 11, to support a load 60 having a flat lower surface for movement in a plane. The discs are mounted on feet 62 at the nodes upon a fixed support 64. The discs 58 are driven in a manner similar to the discs 2 to create air pressure pneumatodynamically to support the flat surface of the load 60 a small distance above the discs. The load 60 is then free to move laterally supported by the air pressure.

It will be appreciated that the laminated bearing member need not be in the form of a disc, and that it may be given an initial curvature either mechanically or by an electrical bias. In such a case, the bending and unbending of the structure may affect the extent of curvature and not necessarily its direction.

The invention may also be applied to journal bearings in which a member with a cylindrical surface acts as a support for a tubular laminated bearing member, or the latter acts as a support for the former.

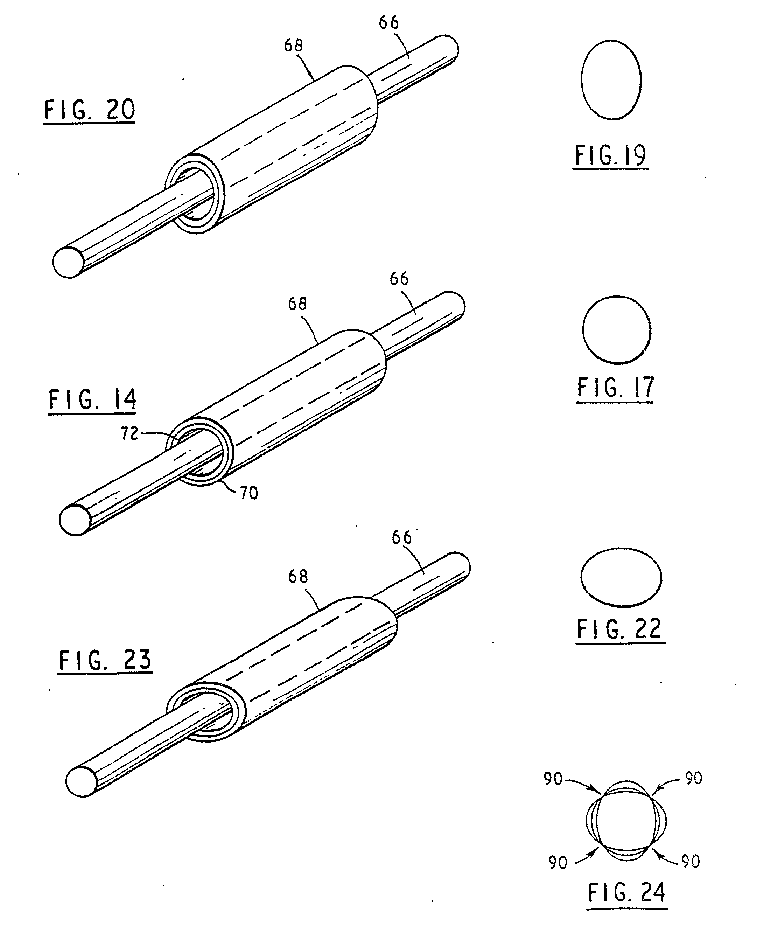

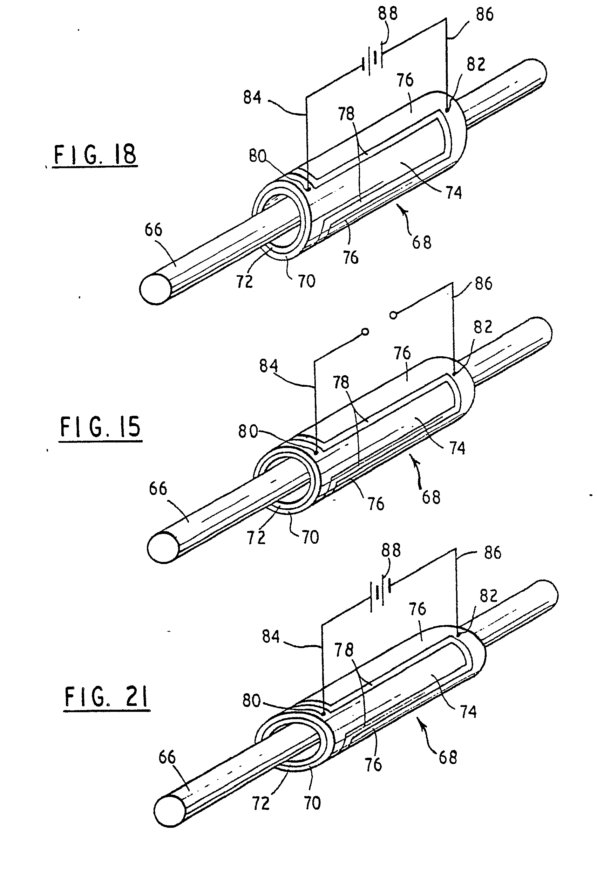

In such a construction (Fig. 14), a rod 66 carries a tubular transducer 68 composed of a laminated piezoelectric structure analogous to that of the disc described above, that is comprising an outer layer 70 of piezoelectric material and an inner layer 72 of another material, for example molybdenum.

Pairs of oppositely disposed regions of the piezoelectric material have oppositely directed electric potentials applied thereto to cause deformation of the tube.

As shown in Fig. 15, a thin film of plated metal is formed on the outer surface of the layer 70 and divided into two parts, each of two electrodes 74 and 76, respectively, separated by a serpentine gap 78 having four longitudinal sections parallel to the axis of the tube (Fig. 16). Electrical contacts 80 and 82 connect leads 84 and 86 to the electrodes 74 and 76, respectively, at the ends of one of the longitudinal sections of the gap 78.

The "at rest" shape of the tubular transducer 68 is circular as shown in Fig. 17. If the terminals of a battery 88 are connected to the leads 84 and 86 as shown in Fig. 18, the deformation of the transducer 68 due to the electrodes 74 and 76 is in opposite directions and the transducer takes on an elliptical shape in cross-section (Figs. 19 and 20).

If the connections of the terminals of the battery 88 to the leads 84 and 86 are reversed (Fig. 21), the transducer again takes on an elliptical shape in cross-section, but with the major and minor axes normal to their previous positions (Figs. 22 and 23).

By replacing the battery 88 by an oscillator driven at an appropriate frequency and voltage, the transducer 68 may be made to bend and unbend between the shapes shown in Figs. 19 and 22, thus generating an air pressure to support the transducer from the rod or vice versa.

By superimposing the configurations of the tubular cross-section of Figs. 17, 19 and 22, as shown in Fig. 24, it will be seen that with two pairs of surface electrodes, there are four longitudinal nodal lines 90 along which the tube is stationary during oscillation. The nodal lines coincide with the longitudinal sections of the gap 78, with one of which the electrical contacts 80 and 82 are aligned.

Fig. 16 shows the external surface of the electrodes unwrapped to provide a flat surface in order to clarify the shape.

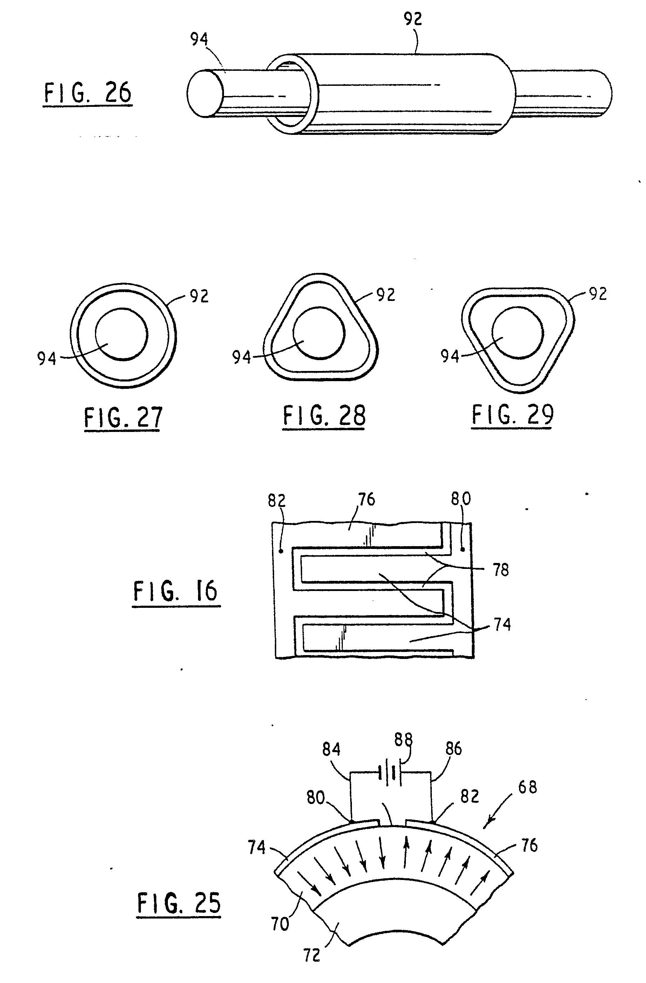

In Fig. 25, the location of electrical contacts 80 and 82 has been changed in order to show them connected to electrodes 74 and 76. The inner molybdenum layer 72 of the tubular transducer 68 is at an intermediate electrical potential between the potentials at electrodes 74 and 76. The portion of piezoelectric layer 70 under the electrode 76 expands when it is positive, while the reverse is true of the portion under electrode 74 when it is negative.

Thus the deformation of the portions will be in opposite directions and will provide a vibratory oscillation which pressurizes the space between the tubular transducer 68 and the rod 66 so there is no mechanical contact and a very low friction journal bearing is provided for slidable (or rotary) motion along the rod 66 with extremely low friction.

Such a tubular arrangement may employ a rod with an outside diameter of 9.517 mm and an inner diameter of the tubular transducer of 9.543 mm for a gap of 0.013 mm between the surfaces of the rod and the transducer, when centred. The peak vibration amplitude of the transducer is about 0.01 mm.

The arrangement of electrodes on the outer surface of the piezoelectric layer may be varied. For example, two sets each of three equally spaced electrodes may be plated on the piezoelectric layer. With such an arrangement on a laminated tubular transducer 92 (Fig. 26), the transducer is of circular section in the "at rest" position (Fig. 27), centred on a rod 94. As opposite potentials are applied to the two sets of electrodes, the shape in cross-section to approximately triangular with curved corners (Fig. 28) with a lower face horizontal. Then as the potentials are reversed, the shape changes to a similar triangular shape (Fig. 29) with an upper face horizontal.

The electrode material is nickel plated to a thickness of 1 to 3 micrometres and the gap 78 is about 250 to 500 micrometres wide. The tubular suspension is stiff and has lower load capacity if the clearance is tight. It is also more susceptible to humidity affecting the loading of the bearing with condensed water. If the clearance is loose, then a greater load can be carried, positioning is less precise and the parts are easier to fabricate. If the suspension is not stiff enough, then play in the bearing can be excessive and accuracy of positioning is sacrificed.

The electrode pattern on an elliptical mode tube (journal) bearing consists primarily of four axially symmetrical electrodes (Figs. 15 and 16). The opposite electrodes 80 and 82 are connected either by discrete wires or by small annular patterns at the ends of the plated electrode. Because the PZT piezoelectric ceramic is poled uniformly outwardly and the electric field is of opposite polarity under adjacent electrodes, the strain in the PZT material will be opposite under adjacent electrodes, causing one region to bend outwardly and the adjacent region to bend inwardly. Whether the PZT/molybdenum laminate bends inwardly or outwardly varies with the product of the sign of the applied field and the sign of the poling direction of the PZT. In the example described, the PZT material was poled uniformly outwardly and the direction of the applied field under adjacent electrodes was changed in order to cause one region under one electrode to bend inwardly and the region under an adjacent electrode to bend outwardly. However, the PZT tube can be poled in opposite direction in different regions.

For example, the electrode pattern described could be used to pole the PZT material nonuniformly, by heating the PZT material to 150°C and applying a field of 787.4 V/mm (20 V/mil) to the PZT material. Subsequent to this poling operation, the electrodes are bridged so that the entire outer surface of the PZT tube becomes an electrode and the entire inner surface becomes another electrode. The adjacent quadrants of the PZT material distort differently because although the field is uniform radially, the poling is opposite in adjacent quadrants. An added feature of this latter poling is that the voltage required to drive the device is reduced to half. However, the current required to drive the device is doubled. The total power required is identical in either example for the same bearing load capacity.

In the cases in which the squeeze bearing contains a piezoelectric "bimorph" of disparate materials, such as PZT with alumina or PZT with molybdenum, it should be recognized that a thermal expansion bimorph (analogous to a bimetallic strip) exists. This will cause physical warpage, and ultimate bearing failure, if the temperature is changed over a sufficiently large range. This problem can be overcome, if required, by use of differently poled PZT for both halves of the bimorph, or by the use of a ceramic such as cordierite which can be matched in thermal expansion coefficient to that of PZT.

An additional constraint in the design of squeeze bearings is to avoid bearing failure caused by condensation of moisture in the bearing or on the bearing surfaces during the compression portion of the oscillatory cycle of air captured between the surfaces of the bearing. This reduces the effectiveness of such bearings under conditions of very high humidity, although heating of the bearing can be employed for the purpose of minimizing or eliminating the problem. Heating reduces the local relative humidity in the bearing when ambient conditions include high humidity. Alternatively, the bearing can be used in a hermetically sealed container or in a controlled (air conditioned) atmosphere.

A tubular journal squeeze bearing 68 or 92 can be made from an inner tube either of molybdenum (drilled, reamed and lapped), plated alumina or cordierite (ground and lapped). The inside diameter of the inner tube is 0.9543 in diameter and it is 1.40 cm long. The wall thickness is approximately 0.08 cm. The outer tube is PZT-4, 1.27 cm long ground to an inside diameter that is 25 micrometres larger than the outside diameter of the inner tube. The wall thickness of the PZT is approximately 0.08 cm, bringing the outside diameter of the PZT to approximately 1.29 cm. The PZT and inner tube are plated and an electrode pattern is produced by mechanically grinding or sandblasting or by masking and etching. The two tubes are bonded together with the use of a wicking type of epoxy of low viscosity and then electrical contacts are made at the nodes of the PZT and at the node of the outside of the inner tube (which is longer than the PZT and hence accessible) for touch sensing. Testing is carried out in a manner analogous with that for discs except that a mating conductive rod of diameter 0.9518 cm is used instead of a flat surface.

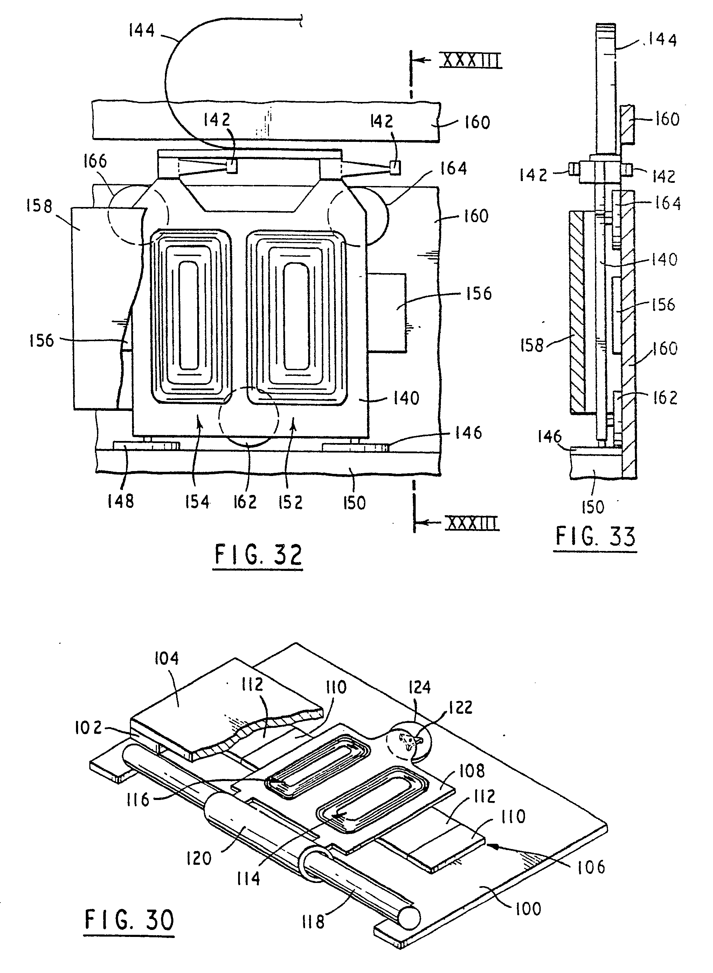

The invention may be used to provide support bearings for the armature of a linear motor of a magnetic disc head actuator such as described in EP—A—55334. The linear motor (Fig. 30) comprises a base 100 forming a lower magnetic yoke piece, end magnetic yoke pieces 102 of which only one is shown, and an upper magnetic yoke piece 104. A space is defined by the yoke pieces, within which are located a stator 106 and a movable non-magnetic armature 108. The stator 106 comprises alternate opposite polarity magnets 110 and 112, the end ones of which may be half width. The armature 108 carries two coils 114 and 116, which are alternately energised to move the armature along the stator.

A stationary rod 118 is mounted on the base 100, parallel to the direction of movement of the armature 108 and a tubular squeeze bearing transducer 120, similar to transducer 68 or 92, surrounds the rod 118 and is secured to one side of the armature 108. To the other side of the armature 108 is secured a triangular mount 122, similar to mount 24, of a transducer disc 124, similar to disc 2.

The transducer 120 and disc 124 are given an oscillatory excitation, as described above, to support the sides of the armature from the rod 118 and base 100, respectively.

A linear motor similar to that shown in Fig. 30 may be used in magnetic disc actuator as shown in Fig. 31. The base 100 is there shown as having side plates 126 and 128. Four magnetic heads 130 are mounted by resilient beryllium-copper arms on the transducer 120 for co-operation with magnetic discs (not shown). Conductors lead from the head to a flexible wiring harness 132 consisting of parallel wires within an insulating ribbon. The harness 132 may also include conductors to supply excitation voltages to the transducer 120. A similar wiring harness 134 is connected to the other side of the armature 108 to provide electrical connections to the coils 114 and 116 and to the disc 124.

A slug 136 of ferromagnetic permalloy is inserted in the armature 108 to co-operate with the magnets of the stator 106. The effect of the slug and magnets is to pull the armature towards the stator against the lifting action of the disc 124 and transducer 120.

In another application of the invention (Figs. 32 and 33), an armature 140 carrying magnetic recording heads 142 on resilient beryllium-copper arms and connected electrically by wires in a strap 144, is supported by two squeeze bearing discs 146 and 148 from a base 150. The armature is similar to that described in EP—A—0055334 and carries two windings 152 and 154 between an upright stator 156 comprising alternate opposite polarity magnets and a magnetic yoke piece 158. The stator 156 and yoke piece 158 are carried on a plate 160 which serves as a flat surface against which react three squeeze bearing discs 162, 164 and 166 carried by the armature 140.

Operation of the discs 146 and 148 provides frictionless support of the armature from the base 150.

Operation of the discs 162, 164 and 166 provides sideways frictionless guidance from the plate 160. A counterforce to such sideways thrust may be provided, for example, by a slug (not shown) similar to the slug 136 in Fig. 31. Other means for providing balancing counterforce may be used.

For both the tube or flat bearing, the bearing is composed of a laminated transducer and a second part, the rod or flat surface. These two parts are frictionless with respect to each other. Either (a) the load to be supported is attached to the laminated transducer and the co-operating rod or flat surface is mounted on the stationary base of the structure or (b) the load to be supported is attached to the rod or flat surface and the laminated transducer is mounted on the stationary base of the structure. In case (a), the transducer and its associated electrical leads moves with the moving load to be supported, while in case (b), the transducer is stationary (except for the small amplitude vibration necessary for operation).

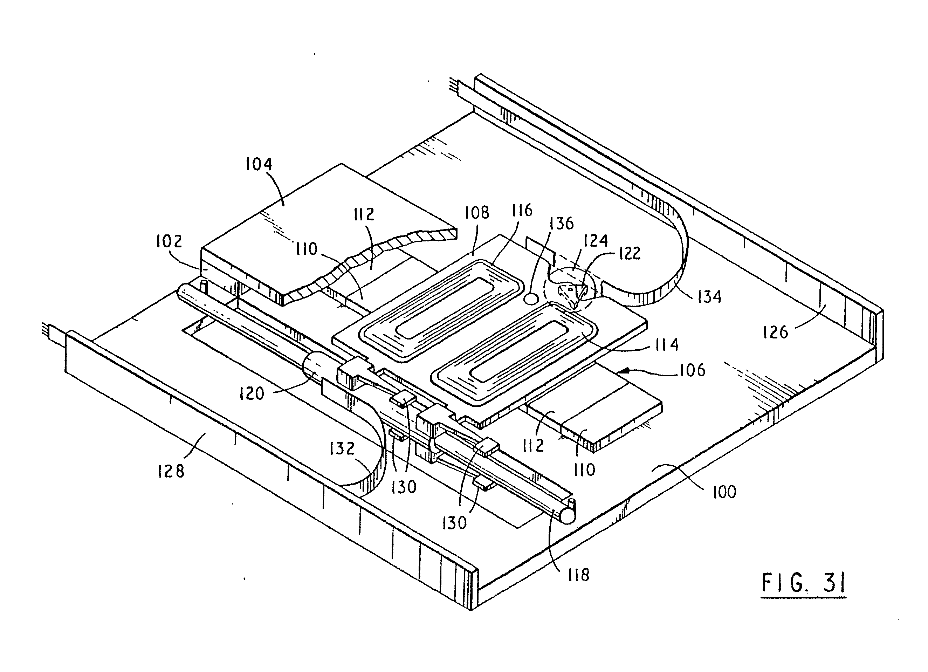

Fig. 34 illustrates one modification of the structure of the embodiments of Figs. 15 to 29 in accordance with the preceding paragraph.

A tubular laminated transducer 170 is mounted on a surface of a stationary part 172 of the structure along a nodal line. A rod 174 is located within the transducer 170 and carries a load in the form of magnetic recording head 176 as its end. Another bearing (not shown) can be arranged at the other end of rod 174 (not shown) to provide aligned two point support for the rod. Operation of the transducer 170 suspends the rod 174 by pneumatodynamic effect vibration of the transducer relative to the rod suspended within it is minimized by the nodal line mounting.

**Claims**

1. A fluid bearing assembly comprising a support (16; 100), an object (32; 108) to be supported with low friction by the support, a bearing member (4, 6; 124) between the object and the support, the bearing member being connected to the support or to the object, and oscillatory means (12, 14; 46) connected to the bearing member for electric or magnetic excitation thereof, the bearing being designed to change its physical dimensions in response to the excitation applied by the excitation means, at the frequence of excitation thereby causing air pressure variations between the bearing member and the support or the object in order to support the object by a squeeze bearing effect characterized in that the bearing member (4, 6; 100) is a laminate of at least two layers (4 and 6; 70 and 72), at least one layer (4; 70) being of a transducer material responsive to the excitation, the layers being such as to cause the bearing member to flex and unflex.

2. An assembly according to claim 1, in which the transducer material is of electrostrictive, magnetostrictive or piezoelectric material.

3. An assembly according to claim 1 or 2, in which the bearing member is mechanically secured to the support or to the object at a mechanical node or nodes (28) of its vibration.

4. An assembly according to claim 1, 2 or 3, in which the bearing member is of disc shape (42; 124), whereby excitation causes cupping and uncupping of the bearing member.

5. An assembly according to claim 1, 2 or 3, in which the bearing member is of tubular shape (68).

6. An assembly according to claim 1, 2 or 3, in which an object (32; 66) is mechanically connected at spaced locations to a disc shape bearing member (4, 6) and to a tubular bearing member (68).

7. An assembly according to claim 4, in which an object (60) is mechanically connected at spaced locations to a plurality of disc shape bearing members (58).

8. An assembly according to claim 7, in which a disc shaped bearing member co-operates with a bearing surface on one support and another disc shaped bearing member co-operates with another bearing surface on another support.

9. An assembly according to any preceding claim, in which electrical leads (12, 14) are connected to the transducer at positions located upon a locus or loci of minimal oscillation comprising a node or nodes.

## Patentansprüche

1. Fluidlageraufbau mit einer Abstützung, (16; 100), einem durch die Abstützung mit geringer Reibung zu führenden Objekt (32; 108), einem mit der Abstützung oder dem Objekt verbundenen Lagerteil (4, 6; 124) zwischen dem Objekt und der Abstützung, mit einem an das Lagerteil zur elektrischen oder magnetischen Erregung angeschlossenen Oszillator (12, 14; 46), wobei der Aufbau des Lagerteils eine Änderung der physikalischen Abmessungen in Abhängigkeit von der durch die Erregungsmittel angelegten Erregung bei der Erregungsfrequenz gestattet, wodurch Luftdruckunterschiede zwischen dem Lagerteil und der Abstützung oder dem Objekt verursacht werden, um das Objekt durch einen Verdichtungslagereffekt zu tragen, dadurch gekennzeichnet, daß das Lagerteil (4, 6; 100) ein Laminat aus wenigstens zwei Lagen (4 und 6; 70 und 72) ist, wobei wenigstens eine Lage (4; 70) aus einem auf die Erregung ansprechenden Wandlermaterial besteht und die Lagen so hergestellt sind, daß sie ein Biegen und Entbiegen des Lagerteils verursachen.

2. Anordnung nach Anspruch 1, bei der das Wandlermaterial ein elektrostriktives, magnetostriktives oder piezoelektrisches Material ist.

3. Anordnung nach Anspruch 1 oder 2, bei der das Lagerteil an dem mechanischen Knoten oder den mechanischen Knoten (28) seiner Schwingung mit der Abstützung oder dem Objekt mechanisch verbunden ist.

4. Anordnung nach Anspruch 1, 2 oder 3, bei der das Lagerteil die Gestalt einer Scheibe (42; 124) aufweist, wobei die Anregung ein Einbeulen oder Ausbeulen des Lagerteils verursacht.

5. Anordnung nach Anspruch 1, 2 oder 3, bei der das Lagerteil eine Rohrform (68) aufweist.

6. Anordnung nach Anspruch 1, 2 oder 3, bei der ein Objekt (32; 66) an im Abstand voneinander angeordneten Stellen mechanisch mit einem scheibenförmigen Lagerteil (4, 6) und einem rohrförmigen Lagerteil (68) verbunden ist.

7. Anordnung nach Anspruch 4, bei der ein Objekt (60) an im Abstand voneinander angeordneten Stellen mechanisch mit einer Vielzahl von scheibenförmigen Lagerteilen (58) verbunden ist.

8. Anordnung nach Anspruch 7, bei der ein scheibenförmiges Lagerteil mit der Lagerfläche auf einer Abstützung und ein anderes scheibenförmiges Lagerteil mit einer anderen Lagerfläche auf einer anderen Abstützung zusammenwirkt.

9. Anordnung nach einem der vorstehenden Ansprüche, bei der elektrische Leitungen (12, 14) mit dem Wandler an Stellen verbunden sind, die sich auf einem Ort oder auf Orten minimaler Schwingung einschließlich eines Knotens oder von Knoten befinden.

## Revendications

1. Ensemble de palier fluidique comprenant un support (16; 100), un objet (32; 108) devant être supporté à faible frottement par le support, un élément de palier (4, 6; 124) disposé entre l'objet et le support, l'élément de palier étant relié au support ou à l'objet et des moyens oscillatoires (12, 14; 46) reliés à l'élément de palier pour en assurer l'excitation électrique ou magnétique, le palier étant conçu pour changer ses dimensions physiques en réponse à l'excitation appliquée par les moyens d'excitation à la fréquence d'excitation pour provoquer des variations de pression d'air entre l'élément de palier et le support ou l'objet en vue de supporter l'objet par effet de compression, caractérisé en ce que l'élément de palier (4, 6; 100) est un stratifié constitué d'au moins deux couches (4 et 6; 70 et 72), dont au moins une couche (4; 70) est en un matériau transducteur sensible à l'excitation, les couches étant telles que l'élément de palier est amené à fléchir alternativement dans des sens opposés.

2. Ensemble selon la revendication 1, caractérisé en ce que le matériau transducteur est un matériau électrostrictif, magnétostrictif ou piézoélectrique.

3. Ensemble selon la revendication 1 ou 2, dans lequel l'élément de palier est fixé mécaniquement sur le support ou sur l'objet à un ou des noeuds (28) de vibration.

4. Ensemble selon la revendication 1, 2 ou 3, dans lequel l'élément de palier est sous forme de disque (42; 124), l'excitation provoquant un bombement dans des sens opposés de l'élément de palier.

5. Ensemble selon la revendication 1, 2 ou 3, dans lequel l'élément de palier est de forme tubulaire (68).

6. Ensemble selon la revendication 1, 2 ou 3, dans lequel un objet (32; 66) est relié mécaniquement à des emplacements espacés avec un élément de palier en forme de disque (4, 6) et avec un élément de palier tubulaire (68).

7. Ensemble selon la revendication 4, dans lequel un objet (60) est relié mécaniquement à des emplacements espacés avec une pluralité d'éléments de palier en forme de disque (58).

8. Ensemble selon la revendication 7, dans lequel un élément de palier en forme de disque coopère avec une surface d'appui d'un support et

**0 067 317**

un autre élément de palier en forme de disque coopère avec une autre surface d'appui d'un autre support.

9. Ensemble selon l'une quelconque des revendications précédentes, dans lequel les conducteurs électriques (12, 14) sont reliés au transducteur à des emplacements situés sur un ou des lieux géométriques d'oscillations minimales comprenant un ou plusieurs noeuds.

**0 067 317**

FIG. 1
(PRIOR ART)

FIG. 11

FIG. 10

1

FIG. 2

FIG. 4

FIG. 6

FIG. 9

FIG. 3

FIG. 5

FIG. 7

FIG. 8

FIG. 12

FIG. 34

FIG. 13

FIG. 20

68
66

FIG. 19

FIG. 14

68
66

72

70

FIG. 17

FIG. 23

68
66

FIG. 22

90
90

90
90

FIG. 24

6

FIG. 18

FIG. 15

FIG. 21

FIG. 26

FIG. 27    FIG. 28    FIG. 29

FIG. 16

FIG. 25

FIG. 32

FIG. 33

FIG. 30

F I G. 31